# EUROPEAN PATENT SPECIFICATION

(11) **EP 2 122 422 B1**
(45) Date of publication and mention of the grant of the patent: **29.09.2010**
(21) Application number: 08735426.2
(22) Date of filing: 17.03.2008
(51) Int. Cl.: G05B 19/401, B25J 9/16

(54) **A METHOD AND AN APPARATUS FOR COMPENSATING FOR GEOMETRICAL ERRORS BETWEEN WORK OBJECTS AND A HOLDING DEVICE**
VERFAHREN UND VORRICHTUNG ZUR KOMPENSATION GEOMETRISCHER FEHLER ZWISCHEN ARBEITSOBJEKTEN UND EINER HALTEEINRICHTUNG
PROCÉDÉ ET APPAREIL POUR COMPENSER DES ERREURS GÉOMÉTRIQUES ENTRE DES OBJETS À TRAVAILLER ET UN DISPOSITIF DE RETENUE

(30) Priority: 21.03.2007 US 907114 P
(43) Date of publication of application: 25.11.2009
(73) Proprietor: ABB Technology AB, 721 83 Västerås (SE)
(72) Inventor: BROGÅRDH, Torgny, S-724 79 Västerås (SE)
(74) Representative: Reyier, Ann-Mari
(86) International application number: PCT/EP2008/053162
(87) International publication number: WO 2008/113783

(56) References cited:
- EP-A- 1 584 426
- WO-A-93/05479
- WO-A-2006/079617
- US-A- 5 706 408
- US-A1- 2004 202 362

## Description

### FIELD OF THE INVENTION

The present invention relates to a method and an apparatus for compensating for geometrical errors between work objects and a device holding the objects during processing of the objects, wherein a measurement system including at least one sensor is providing surface measurements on the object.

The invention also relates to the use of such a method for correction of gripping errors in connection with processing work objects by means of an industrial robot programmed to follow a path or reach specific points on the object.

### PRIOR ART

Industrial manipulators, such as robots, are often used for carrying out a process, such as deburring, milling, deflashing, polishing or grinding, on a work object. The robot is programmed to follow a path relative to the object during the processing or move relative specific target points on the work object. The path includes a plurality of target points. A robot control unit controls the movements of the robot in accordance with instructions in a stored control program. The target points are included in the instructions in the control program.

In many applications, the work object is held by a holding device such as a gripper, a fixture or a jig, during the processing. For example, the robot is provided with a gripper that holds the work object during the processing. Alternatively, the robot holds a tool and the work object is arranged in a fixture or jig. During production, the gripper repeatedly picks new work objects to be processed, or new work objects are placed in the fixture. A problem in connection with gripping of the objects is that the position and orientation of the work object relative to the holding device may vary for different object individuals of the same type. Accordingly, the robot path has to be corrected for each work object in dependence on the position and orientation of the work object relative the holding device. The same problem applies for other types of programmable and movable mechanical units than industrial robots.

This problem is solved by determining the position and orientation of each work object relative to the gripper and then adjusting the robot path based on the determined position and orientation. It is known to determine the position and orientation of the work object by measuring the whole object using a measurement system including for example a laser scanner. However, before starting the measurements, the measurement system has to be calibrated. This can be made in many ways, for example a calibration object can be used during the calibration. The calibration object is then, for example, a cube, and using an optical bench with a high precision xyz-positioner the calibration object is moved to different locations in the measurements range of a scanner. Knowing the exact size of the calibration object and its exact position and orientation relative the laser scanner coordinate system the laser scanner can be calibrated in its coordinate system, which may be located at its mounting surface. This calibration gives a plurality of calibration parameters for the measurement system, which are stored and used later for the measurements of arbitrary work objects in the coordinate system of the measurement system. Usually this calibration is carried out by the manufacturer of the scanner and the customer using the scanner is then using the calibration data for setting up its special purpose measurements.

In the case the measurement system is used in a robot application, the coordinate system of the measurement system has to be calibrated relative to the base coordinate system of the robot. This is, for example, done by ordering the robot to position another calibration object in front of the scanner and to move the calibration object in a plurality of positions and orientations relative to the coordinate system of the scanner. For this calibration the position and orientation of the calibration object must be known relative the robot tool coordinate system. Then the inverse kinematics model of the robot is used to calculate the position and orientation of the calibration object relative the robot base coordinate system, which has the drawback that errors are introduced in the calibration because of the kinematic errors of the robot. This is especially a problem in the case of using a low cost robot with poor kinematics accuracy. Such low cost robots can be used at lead through programming, which is very useful for the manufacturing of products in small lot sizes. Each time the measurement system or the robot is moved or exchanged, the calibration of the scanner relative to the robot has to be repeated. This is time consuming and not suitable when small lot sizes are produced and when the laser scanner needs to be often moved to be adapted to the geometry of the objects. Moreover the operators need to make sure that calibration parameters are stored and that the correct calibration parameters are used.

When using a laser scanner for the measurement of such objects as castings there is also the problem that fins, excess of material and other irregularities make the measurements very inaccurate. The objects are usually also very complex and the computation burden is high to calculate an accurate position and orientation of the object in the coordinate system of the measurement system. Often the information from one measurement of the object is not enough and it is necessary to measure the object from different sides and with a complex geometry the calculations will then be even more difficult. It may also be the case that it will not be possible for the operator to know how to place the object in front of the laser scanner to obtain the measurement information that the system needs.

EP1584426A1 discloses a tool centre calibration system and a method for tool centre calibration including the features of the preamble of the claims 1 and 9.

### OBJECTS AND SUMMARY OF THE INVENTION

The object of the present invention is to provide an improved method and apparatus for compensating for geometrical errors between work objects and a holding device.

This object is achieved by a method as defined in claim 1 and an apparatus as defined in claim 9.

Such a method comprises:
a. placing a reference object in a first reference position and orientation relative to a sensor providing surface measurements on the object,
b. measuring the positions of a plurality of points on a first reference surface of the reference object, and storing the measured positions,
c. calculating the position and orientation of the first reference surface based on the stored positions,
d. moving the reference object a known amount in a first degrees of freedom relative to the sensor,
e. measuring the positions of a plurality of points on the first reference surface of the reference object, and storing the measured positions,
f. calculating the position and orientation of the first reference surface after said moving based on the stored positions,
g. repeating the steps a-f for at least the same number of degrees of freedom as the number of degrees of freedom in which the object may have errors in relation to the device,
h. performing the steps b-g for at least two more reference surfaces,
i. calculating by best fit the position and orientation changes of all the reference surfaces caused by the moving of the reference object,
j. calculating a relationship between measured and calculated position and orientation changes of the reference surfaces and corresponding changes of the position and orientation of the object ,
k. performing for all subsequent objects of the same type as the reference object hold by the device:
l. placing the object in said reference positions and orientations relative to the sensor,
m. measuring for all said reference positions and orientations the positions of a plurality of points on said reference surfaces of the object and storing the measured positions,
n. calculating the positions and orientations of the reference surfaces based on the stored measurements,
o. calculating by best fit the position and orientation changes of all the reference surfaces relative the position and orientation of the corresponding reference surfaces of the reference object,
p. calculating the difference in position and orientation between the object and the reference object by means of said relationship between calculated position and orientation changes of the reference surfaces and corresponding changes of the position and orientation of the object, and
q. compensating for the errors based on the difference in position and orientation between the object and the reference object.

The steps a - j are made before or after programming of paths or points on the object. What is necessary is that steps a - j are made on the same object as the programming and that the object has the same position and orientation in relation to the holding device when the steps a - j are made as when the programming is made. The steps k-q are then carried out during manufacturing for each work object after the work object has been placed in the holding device and before the processing of the work object begins, in order to compensate for the errors between the work object and the holding device.

By best fit is meant that a known best-fit method, such as a least square method, is used for fitting the measurements resulting from one measuring with measurements resulting from an earlier measurement.

The number of degrees of freedom in which the work object may have errors in relation to the holding device depends on the construction of the holding device, and may differ between different types of holding devices. At most, the number of degrees of freedom in which the work object may have errors in relation to the holding device is six; three position errors and three orientation errors. However, the number of degrees of freedom of the errors usually is between three and six.

According to the invention, only selected reference surfaces are measured. Instead of measuring the entire object, a plurality of (at least three) reference surfaces are selected on the object. The reference surfaces are selected such that they are suitable for surface measurements. For example, the person who carries out the programming of the robot path selects the reference surfaces. This is an advantage if the object has a statistically irregular shape with for example fins and elevations that varies from object to object and with only few surfaces that are well defined and that the operator can select for the measurements.

Another advantage with the present invention is that no special calibration, using for example a special calibration object with a specified shape, and location relative the robot wrist coordinate system is needed. Instead the work object to be processed will simultaneously be a calibration object and that without the need of knowing its position and orientation relative the robot wrist coordinate system. The calibration of the measurement system relative to the object (steps a - j) is very simple and can be carried out automatically and the operator does not need to handle a lot of calibration parameters and use special calibration routines including for example the precise mounting of a calibration object on the robot. If the measurement system has been moved or exchanged, the calibration of the measurement system can made automatically with any work object that is presently used.

The calibration of the measurement system is preferably made on the production site at the same time as the robot path is programmed, which provides full flexibility of the positioning of the measurement system. This is particularly an advantage when small series of work objects is to be processed. For small series, the robot path often has to be reprogrammed and accordingly a new placement of the measuring system relative to the work object is often required. This means that the measurement system often has to be recalibrated.

Other advantages with the method according to the invention is that there is no need for handling any calibration parameters, the method can be carried out entirely automatic, the method is intuitive and thereby easy to learn for a person with no computer knowledge, the method is easy to use, the method is robust, which means that there is low risk for something to go wrong when carrying out the method, and the method achieves an increased accuracy due to the fact that the kinematical errors of the robot is not influencing the calibration and that the operator selects the surfaces with best surface quality.

The measuring system is configured to measure the reference surfaces of the reference objects. Preferably, the sensor is a 3D scanner or a 3D vision system. The device is, for example, a gripper, a fixture, or jig for holding the object.

According to an embodiment of the invention, the method is used for compensating for errors in the geometric relation between the work object and the holding device in connection with processing objects by means of an industrial robot programmed to follow a path or reach specific points on the object, and the method further comprises correcting the programmed path or the specific points based on the calculated difference in position and orientation between the object and the reference object.

According to an embodiment of the invention, the movements of the reference object and the movements of object to be processed said amount in said degrees of freedom relative to the sensor, are generated automatically by a robot control unit controlling the movements of the robot.

According to an embodiment of the invention, the errors in the geometric relationship between the object and the device are during calibration emulated by moving the device with a robot. In this way the relations between simulated position- and orientation errors of the object and corresponding changes in measurements are obtained.

### BRIEF DESCRIPTION OF THE DRAWINGS

The invention will now be explained more closely by the description of different embodiments of the invention and with reference to the appended figures.
- Fig. 1: shows an example of an object hold by a device and a measuring system including one sensor for providing surface measurements on the object.
- Fig. 2: shows an example of a measuring system including three sensors for providing surface measurements on the object.
- Fig. 3: shows another example of an object hold by a device and a measuring system for providing surface measure- ments on the object.
- Figs. 4a-c: show how the object is moved to three reference po- sitions in order to make it possible for the laser scanner to measure on three reference surfaces on the casting.
- Figs. 5a-d: show the measured reference surfaces shown in fig- ure 4a-c in the coordinate system of the robot.
- Fig. 6: exemplifies the best-fit calculations for one of the refer- ence surfaces when the work object has been moved.
- Fig. 7: shows an example of a relationship between calculated position and orientation changes of the reference sur- faces and corresponding errors of the position and orien- tation of the work object.
- Fig. 8: exemplifies a gripping error giving both an error in posi- tion and orientation of the work object.
- Figs. 9a-b: show an example of how castings can be put on pal- lets with an accuracy good enough for making robot gripping possible.
- Figs. 10a-b: show a loading/unloading table with three sensor arrangements.
- Fig. 11: shows an example of how the sensors in figs. 10a-b can be calibrated.
- Fig. 12: shows a situation where a part of a car is measured.
- Figs. 13a-b: give an example of line structures.
- Fig. 14: shows the original line pattern and the line patterns achieve with a camera moved in the ZO1 and YO1 direc- tion and with the camera rotated around the XO1 axis.
- Fig. 15: shows a constellation with three cameras which form an optical tripod.
- Fig. 16: shows an example of three images at a final assembly of the engine compartment of a car.
- Fig. 17: shows extracted patterns and directions in which relative measurements are made.
- Fig. 18: shows a constellation with two cameras.

### DETAILED DESCRIPTION OF PREFERRED EMBODIMENTS OF THE INVENTION

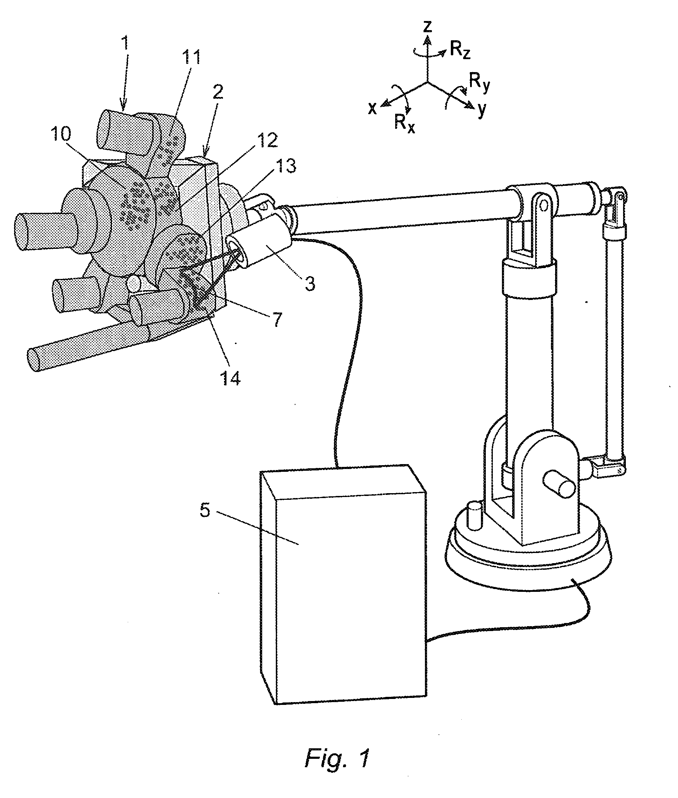

Figure 1 shows an object 1 held by a device 2, and a sensor 3 for providing surface measurements on the object. In this example the object 1 is a casting, the device 2 is a gripper and the process to be carried out is fettling, cutting, grinding and deflashing of the casting. However, the device can also be a fixture or a jig for holding the object. The sensor is arranged stationary in relation to the ground. In this example the sensor is a 3D scanner. However, the sensor can be any type of sensor for measuring surfaces on an object, such as a 2D scanner or a 2D or 3D vision system. A programmable movable mechanical unit, in this example an industrial robot, moves the gripper. The sensor generates measurement signals and is connected to a data processing unit 5 configured to process the measurement signals from the sensor. The data processing unit includes at least one processor and memory storage. The processing unit is a computing device, for example, a computer, such as a PC or a hand-held computer. In this example, the data processing unit is a robot control unit for controlling the movements of the robot.

When the gripper 2 grasps the object 1, it may occur errors in a certain number of degrees of freedoms (DOF) in the geometric relation between the device and the object. In the example shown in figure 1, it may occur errors in six DOF, three position errors x,y,z and three orientation error Rx, Ry and Rz. The present invention provides a method for calculation of a relation between measurement results obtained from surface measurements on the object hold by the device and errors in the geometric relation between the device and the object.

In order to carry out the invention, a reference object of the same type as the objects to be processed is selected. The same reference object is used for programming the robot path. A plurality of well defined surfaces on the reference object are selected as reference surfaces for the measurements. At least three reference surfaces must be selected. For each reference surface, a safe pose of the object with respect to collisions with the measurement equipment is programmed together with two or more postions where one or more scanner lines can be seen on the surface. For example, with a cheap one line scanner and the need of three lines on each surface and four reference surfaces, each with a safe intermediate position, 16 positions need to be programmed. However, these positions do not need to be accurate and can easily be made by lead through programming. If the scanner makes a scanning both in the x- and y-directions only two positions are needed for each measurement surface including the extra positions for a safe movements between the reference surfaces.

Before starting the processing of the objects, the following measuring and calculation steps are carried out on the reference object. The gripper picks the reference object and the reference object is moved into the measurement range of the scanner 1. The reference object is placed in a first reference position and orientation relative to the scanner. The first reference position can be arbitrarily choosen in the measurement range of the scanner. The positions of a plurality of points on a first reference surface of the reference object are measured in the coordinate system of the scanner, and the measured positions are stored. The coordinate system of the scanner does not have to be known. The position and orientation of the first reference surface is calculated based on the stored positions. The reference object is moved a known amount in a first degrees of freedom relative to the sensor, The reference object is then linearly moved a known distance and/or rotated a known angle.

For each movement/rotation the positions of a plurality of points on the first reference surface of the reference object are measured in said coordinate system of the sensor, and the measured positions are stored. The position and orientation of the first reference surface after the movement/rotation is calculated based on the stored positions. The above steps are repeated for at least the same number of degrees of freedom as the number of degrees of freedom in which the object may have errors in relation to the device. Thus, in the case shown in figure 1, movements are made in the x-, y- and z-directions and rotations Rx, Ry, Rz are made, for example in the robot base coordinate system and after each movement/rotation new measurements are made and stored. The position and orientation of the other selected reference surfaces are measured and calculated in the same way. The position and orientation changes of all the reference surfaces caused by the moving/rotation of the reference object is calculated by a best fit method, for example, by the least mean method. A relationship between calculated position and orientation changes of the reference surfaces and corresponding changes of the position and orientation of the object performed by the robot is calculated.

For example, the measured data is transferred to the robot control unit. The robot control unit is instructed to use the measured scanner data to calculate the position and orientation changes of the object. It may then happen that more data is needed to obtain the necessary accuracy and then more lines per surface or more reference surfaces can be added. The robot control unit will inform the operator if this is the case and will give instruction about what to do.

Figure 1 further shows a scanning line 7 on the casting surface, and a plurality of reference surfaces 10-14 of the reference object 1. The reference surfaces are scanned and the measurements are used for the calculations of deviations of position and orientation between the casting used for programming and all other castings that are fettled. It should be mentioned that it may be necessary to mount the measurement scanner on different places dependent on the different shapes and sizes of the castings. Therefore a recalibration of the scanner must be often made in the same way as will be discussed later for a sensor arrangement of an loading/unloading table. For exemple, the robot moves the casting in three orthogonal directions and three orthogonal rotations at each surface measurement to obtain six surface measurements, beside the first reference surface measurement, at each reference surface. The six robot movements are, for exemple, generated automatically by the robot control unit. These measurements will also make it possible to calculate the accuracy of the 6 DOF measurements that are needed. If the operator has set a level of processing accuracy, the control unit can tell the operator if this level has been obtained. If not, more surfaces need to be measured or the object needs to be closer to the sensor. The importance of the calibration of the measurment system is even more pronounced when several measurement scanners are used to make the measurements faster during production.

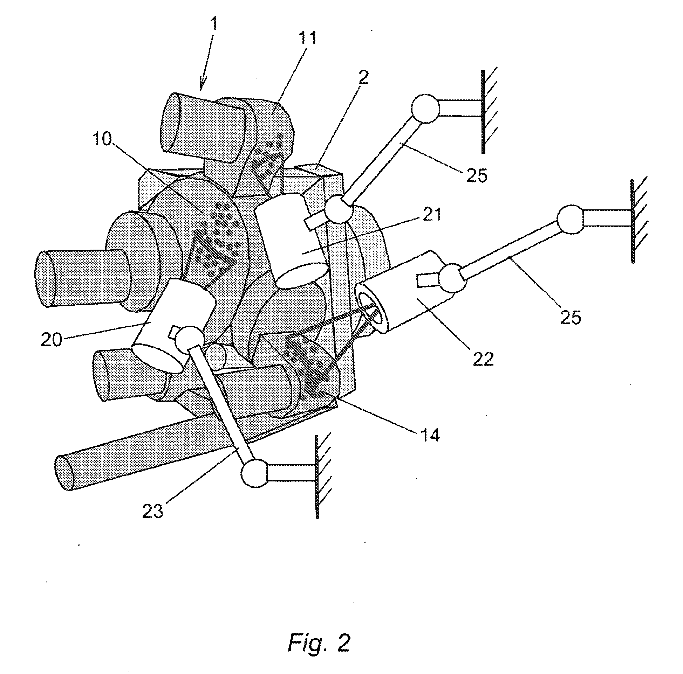

Figure 2 shows an example how a measuring system including three scanners 20-22 up could look like. When a new casting type is programmed, the operator moves the casting with lead through into a suitable position in the measurement area. Then the operator moves the scanners 20-22 into positions and orientations to cover three well defined surfaces 10,11,14 that are as orthogonal as possible. The scanners are moved by low cost manually controlled five or six DOF arms 23-25 in the figure. In the drawing, each arm is possible to manipulate by two ball- and socket joints that can be locked. When the scanners are in place the control unit is ordered to make a calibration of relative errors as measured by the three scanners. As for the one scanner system described above, the robot makes at least six movements containing three orthogonal position changes and three orthogonal orientation changes, which do not need to be separated but that could be combined. This is now only needed once, not once for each scanner. As for the case with only one sensor, simultaneously with the identification of the relative measurment system parameters, this calibration also gives information about the accuracy obtained and it could also give hints about which surfaces that limit the identification resolution. This method can be further developed in such applications as assembly where surface parameters may not be the best choice for calibration but instead edges and other patterns should be used.

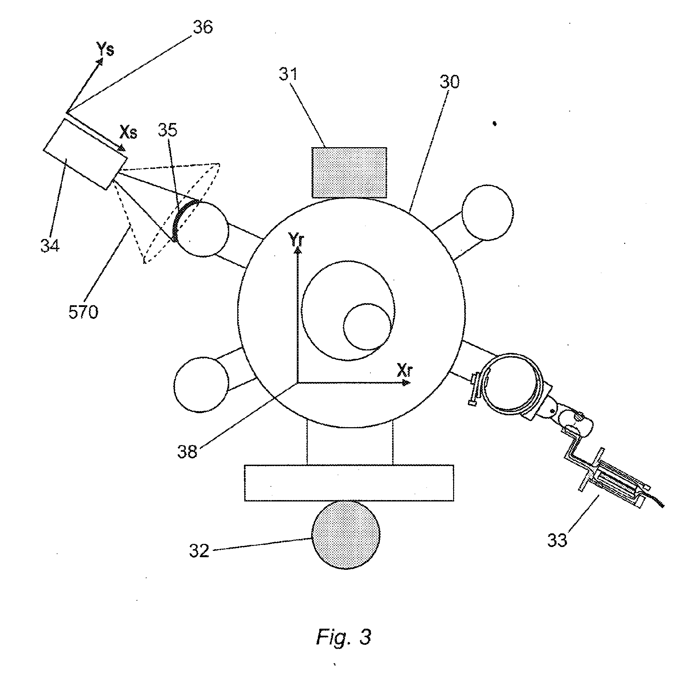

For further description of the method, the measurements and calculations to be made will be described in more detail with reference to figure 3. Figure 3 shows a casting 30 hold by yaws 31 and 32 of a gripper, which is manipulated by a robot. A handle 33 including a six DOF Force/Torque sensor is fastened on the casting and is used to lead the casting to the measurement positions used to obtain a relation between sensor measurements and deviations of casting position/orientation from the casting used at programming. A laser scanner 34 measures a cloud of points on a selected surface part 35 of the casting. The measurements are made in the laser scanner coordinate system 36. The laser coordinate system in relation to the robot coordinate system is not known and with the method according to the invention this relation does not need to be known. The casting surface 35 that is measured is smaller than the measurement range 37 of the laser scanner, which is necessary in order to be able to measure translations and rotations of the surface. The movements of the robots are made in relation to a robot coordinate system 38, which can be the coordinate system defined for the casting or for the gripper.

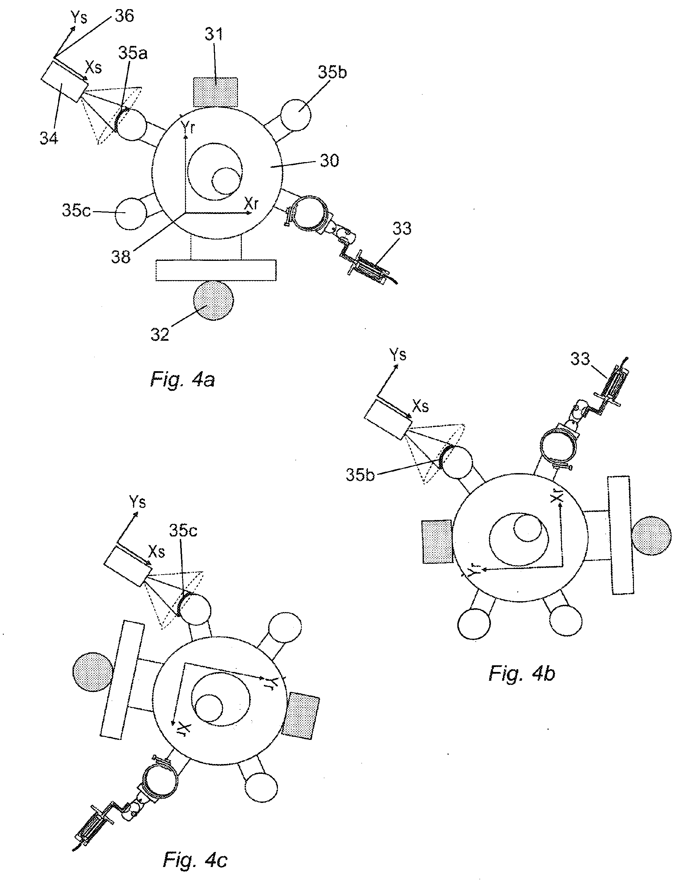

Figures 4a-c shows how the robot is manoeuvred, for example by means of lead through using the handle 33 or automatically by the robot control unit, to three reference positions/orientations in order to make it possible for the laser scanner to measure on three reference surfaces 35a-c on the casting 30. For simplicity only a 3 DOF analysis is shown in the figures. In order to increase the accuracy, measurements on more than three reference surfaces can be made. In the simplified example in the figures only the surfaces 35a-c are measured and only cuts of the surfaces in the XY-plane are shown.

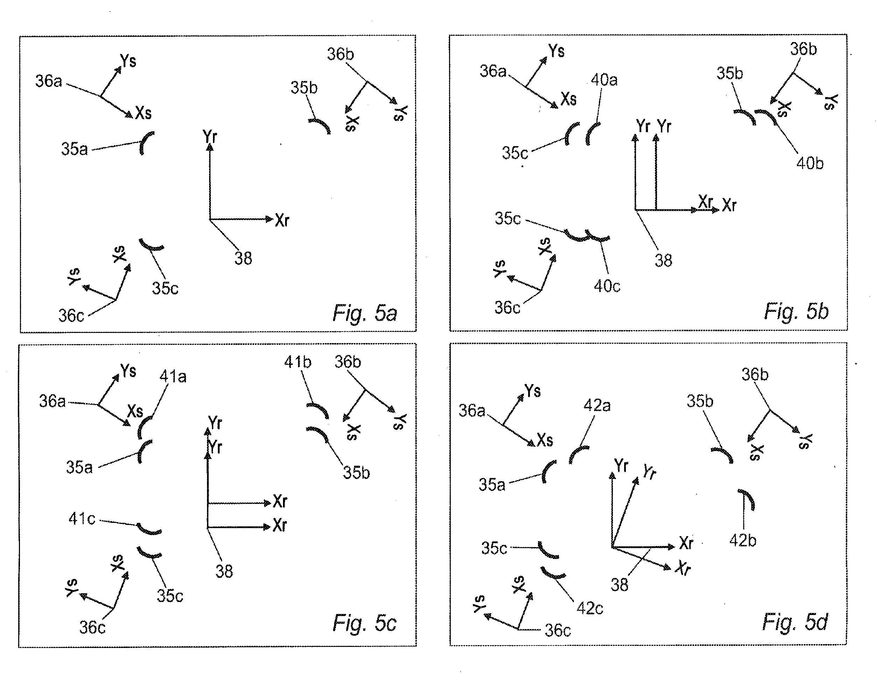

Figure 5a shows the measured reference surfaces 35a-c shown in figure 4a-c in relation to the coordinate system 38 of the robot (Xr, Yr). As can be seen, the position and orientation of the measured reference surfaces as well as the coordinate system of the laser scanner 36a-c relative to the coordinate system of the robot 38 differs for the different casting positions/orientations. Since the measurements are not made simultaneously, but at three different casting positions/orientations according to figures 4a - c, the scanner coordinate system in the robot coordinate system in figure 5a-d has been designated 36a, 36b and 36c.

Figures 5b-d show the calibration movements that the robot performs when only 3 DOF are considered. In figure 5b the robot moves a short distance in the Xr-direction and consequently new positions 40a-c are obtained of the surfaces 35a-c in the sensor coordinate system 36a-c. In figure 5c the robot has moved the casting a short distance in the Yr-direction direction and consequently new positions 41 a-c are obtained of the surfaces 35a-c in the sensor coordinate system 36a-c. In figure 5d a rotation has been made around the Zr-axis direction and consequently new positions and orientations 42a-c are obtained of the surfaces 35a-c in the sensor coordinate system 36a-c. In the actual case with a 6DOF calibration, the calibration also includes a short movement in the Zr-directions and rotations around also the Xr- and Yr-axes. For each calibration movement, the three surfaces are translated and/or rotated in the sensor coordinate system 36a-c. Using the measurement results from the original position/orientation of the surfaces and the new position/orientation of the surfaces after the movement/rotation of the casting, a best fit is made to calculate the values of the movements/orientations of the surfaces in the laser sensor coordinate system.

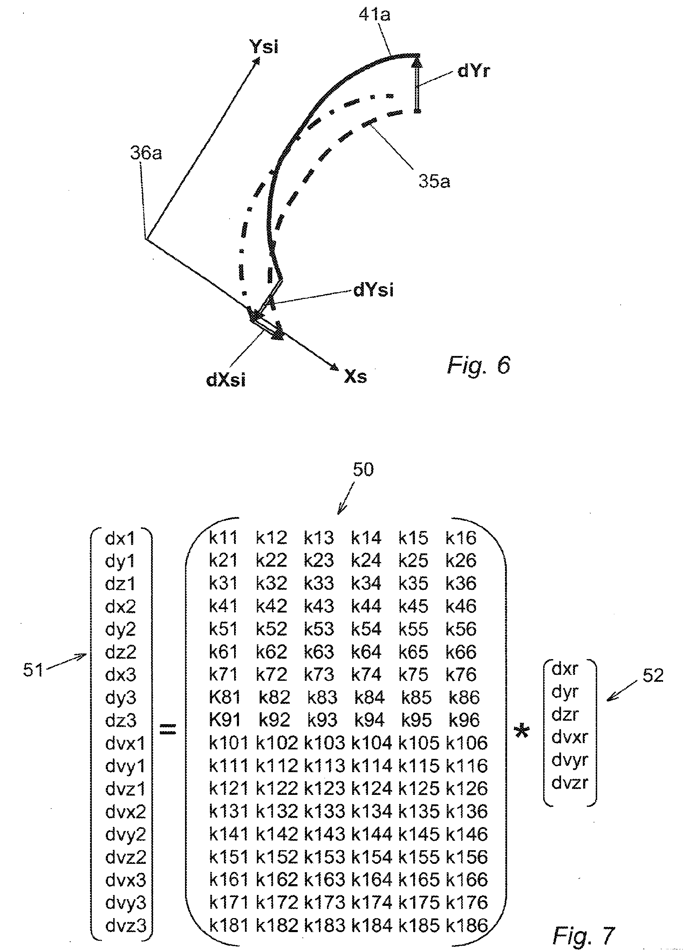

Figure 6 exemplifies the task for the best-fit calculations for one of the reference surfaces when the robot has translated the casting in the Yr-direction. The surface 35a is moved dYr in the robot coordinate system 38 and the surface position 41 a is obtained. The laser scanner will measure a cloud of measurement points for both of the surface positions 35a and 41 a and from these clouds mathematical surface descriptions are made, for example as 2D spline functions. Then a best fit is made to obtain an optimal match between all the surfaces measured. After this best fit the movements/rotations of the surfaces can be calculated in the sensor coordinate system 36a. In the example in figure 6 the object movement dYr will give the movements dYsi and dXsi of surface 35a in the sensor coordinate system. This illustrates how linear movements of the object gives measured surface position changes. A corresponding illustration could be made for rotations of the object. The relations between the linear movements/the rotations and the measured changes in positions/orientations of the surfaces give the relative calibration matrix for the compensation of errors in the holding of the object.

Figure 7 shows an example of a 6 DOF relationship 50 between measured and calculated position and orientation changes 51 of the reference surfaces and corresponding changes 53 of the position and orientation of the object hold by the device. In the 6 DOF case, best fits are made between three or more pairs of surfaces for six translations/rotations of the casting and a matrix K as shown in figure 7 can be identified. Here dxr, dyr and dzr are the robot translations and dvxr, dvyr and dvzr the robot rotations made for each surface according to figure 4a-c. The measured and calculated translations/rotations of the three surfaces by best fit are in the sensor coordinate system dxi, dyi, dzi, dvxi, dvyi and dvzi. As can be seen, the measurements are redundant and to obtain the robot position and orientation deviation from the reference position and orientation used during programming, the pseudo inverse of the matrix K can be used. With this inverse a relation between the measured deviations in position and orientation of the surfaces in the sensor coordinate system and the deviations in casting position and orientation will be obtained, making it possible to compensate for the errors of the object relative the holding device.

The matrix parameters for the relation between the deviations in the sensor coordinate system and in the robot coordinate system can also be obtain by means of a best fit of the redundant parameter set, which is solved as an optimization problem. Of course it is not necessary to measure the deviations of the surfaces in 6DOF for each surface. At least 2 DOF measurements are need for each surface, which DOF to use depends on the relative directions of the surface normals and the shape of the surfaces. In principle it is enough to measure only one surface, but then it will not be possible to obtain the accuracy needed for a typical casting. When calculating the relation between deviations in robot- and sensor coordinate systems the singularity values of the matrix can be calculated and the operator can be informed if another surface must be selected in order to obtain the expected accuracy. When the inverse of the relationship in figure 7 is known any position and/or orientation error of the gripping of the casting can be calculated.

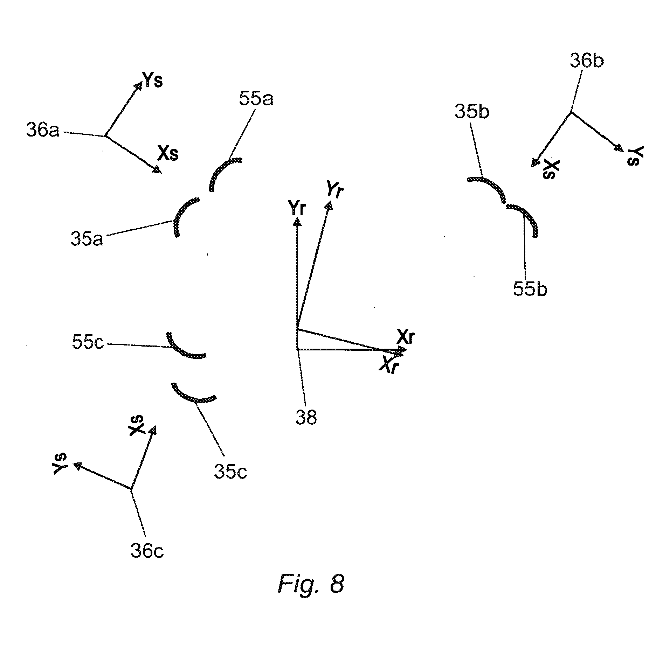

Figure 8 exemplifies a gripping error giving both an error in position and orientation of the casting relative to the position and orientation of the reference casting used at programming. Using best fit the position and orientation changes of the three reference surfaces 55a-c relative the corresponding surfaces 36a-c of the reference casting used in the calibration can be calculated. Knowing these changes in the sensor coordinate system 36a-c, the position and orientation error of the casting in the gripper can be calculated from the inverse of the relationship shown in figure 7 and the error in gripping can be compensated in the robot program.

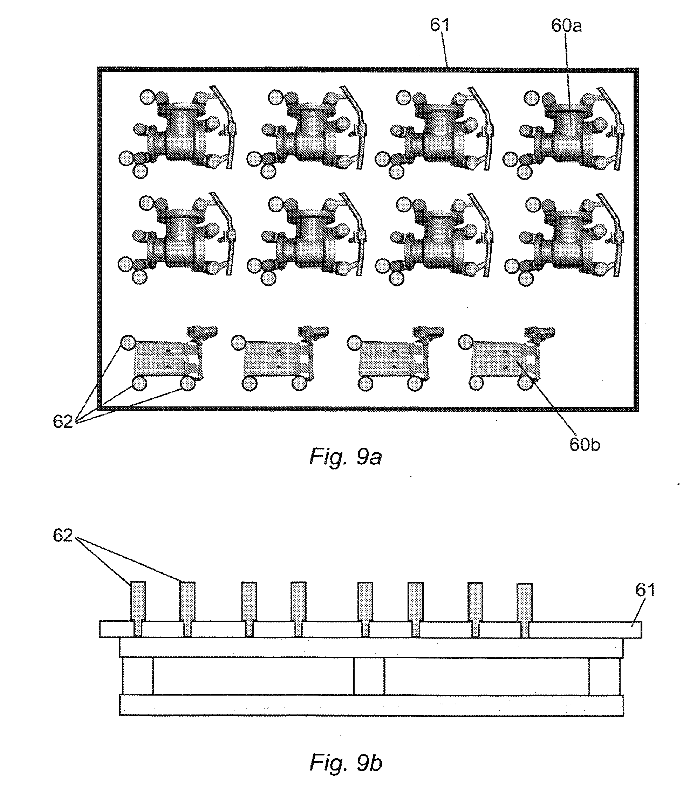

In the following a similar method is described for compensation of errors in the placement of pallets in a fettling are. In order to obtain an efficient handling of the castings in the fettling area it has been found that directly after the blasting process, the castings need to be put on pallets with an accuracy good enough for making robot gripping possible. Figures 9a-b show an example of how this accuracy could be obtained at low cost. The castings 60a-b are put on a sheet of metal 61, in which pins 62 have been inserted in order to define the correct positions of the castings. The metal sheet rests on a pallet for transportation from the blasting area to the fettling area. For each casting product a number of metal sheets are drilled with holes to define the position and orientation of the castings on the metal sheet. Using a robot for the hole drilling the programming can be made by lead through and then copy the drill pattern.

The pallets with the metal sheets are transported with fork trucks either to a buffer storage or directly to a fettling cell. In the fettling cell the pallet with the metal sheet is placed on a cell loading/unloading table and here the position and orientation of the metal sheet is measured for compensation of errors in the placement. An alternative could be to have three pins on the table and that the fork truck manipulates the pallet until there is a mechanical contact between all three pins and the metal sheet. However, this takes too long time and there is a big risk that the accuracy in the placement of the pallet will not be high enough. Instead a sensor arrangement is needed.

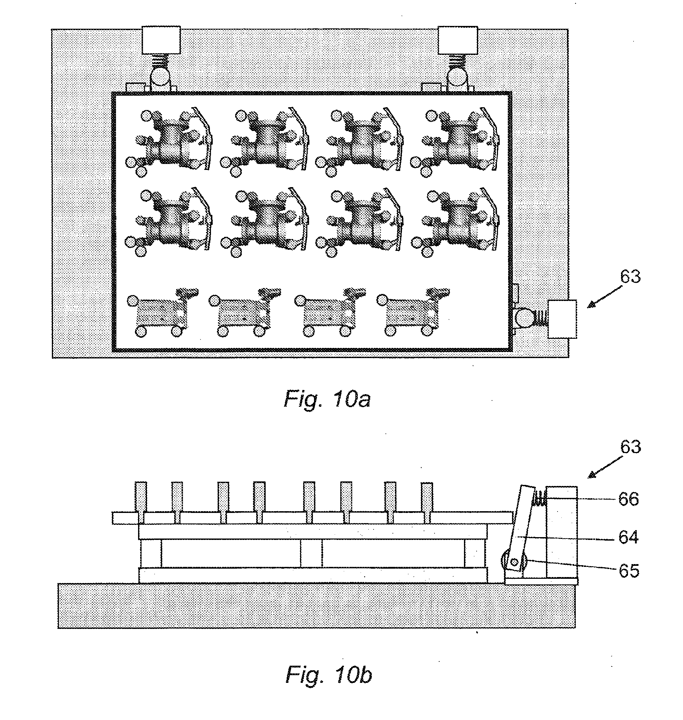

Figure 10a-b shows a loading/unloading table with three sensor arrangements 63 which must be very robust and contain a strong end stop. In the figure each sensor consists of an arm 64 which can rotate around a shaft connected to a resolver or encoder 65. The arm is spring 66 loaded to obtain a useful measurement range. Of course there are many other ways to implement a robust sensor for measuring the sheet position and orientation.

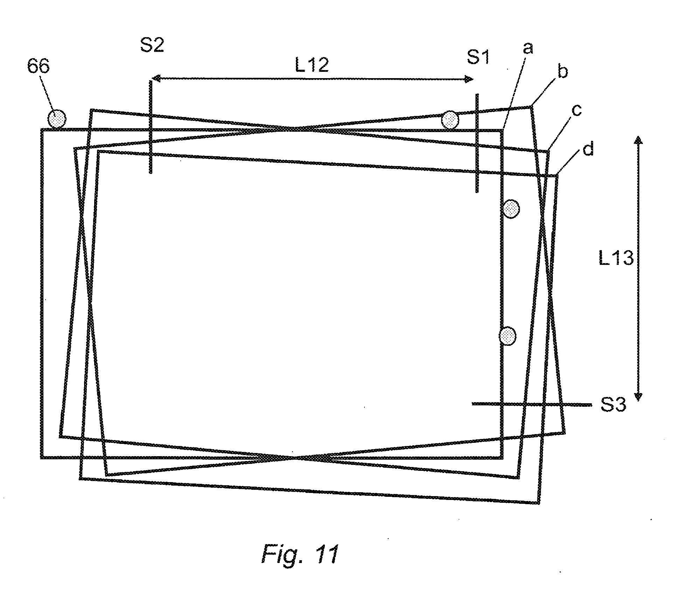

At installation of the sensor arrangement in figure 10a-b the robot control unit must get information of the sensor positions, measurement directions and calibration. Since the sensors may be broken and other problems may arise it should be easy for the fettlers in the foundry to perform the configuration of the sensor arrangement after a sensor exchange. To make this as easy and as intuitive as possible lead through calibration can be used. With reference to figure 11 the following method is then used:
1. The operator starts a pallet calibration program
2. A pallet with an empty sheet is loaded into the cell, se placement a in figure 11.
3. A pin is mounted on the robot and its orientation is made vertical by lead through
4. Lead through with locked orientation is ordered
5. By lead through the pin 66a is moved in contact with the steel sheet on at least two points on two sides, se indications in figure 11. At each contact the operator asks for a registration of the robot position (Xia, Yi1a, Zia), where i=1,..4...
6. The operator orders the control unit to register the measurement signals (m1a, m2a, m3a) from the sensors S1, S2 and S3.
7. Actions 5 and 6 are repeated for at least one more position/orientation of the pallet. The pallet is moved manually on the table and the movement must contain both an offset and a rotation. Of course the measurements at different positions and orientations can be repeated in order to obtain a higher accuracy, in figure 11 the steel sheet has been moved three times.
8. When all the registrations have been made the control unit makes an identification of the model parameters to describe the relationship between the changes in position and orientation of the metal sheet and the three measurement signals. This relationship is then used in production to compensate for the difference between placements of the metal sheet at production and at programming.

The identification can be a simple best fit to a general geometric model of the measurements of the position and orientation of two lines separated by an angel of 90 degrees. Example of an approximate model for the change in sensor measurement signals when the steel sheet is moved from placement a to b is:
dm1ab = k x dd1ab
dm2ab = k x dd2ab + k x L12 x sin(Vab)
dm3ab = k x dd3ab + k x L13 x sin(Vab)
dd2ab = dd1ab

Here dmiab is the change in signal from sensor Si when the metal sheet is moved form pose a to pose b, k is the calibration constant for the sensors, L12 and L13 are sensor distances according to figure 11 and Vab is the rotation angle of the steel sheet between placements a and b. The parameters to be identified are k, L12 and L13. The robot measurements give the values of the translations ddiab and the angle Vab. As can be seen there are four equations and three unknown so the unknown can be calculated. For a higher accuracy more measurements can be made and best fit can be used by for example an optimisation method to get the unknown parameters. Also a more accurate model can be used, which also models the directions of the sensor measurements.

Some of the tools and methods needed for programming of a fettling cell can to some extent also be useful for assembly applications. One problem for a final automobile assembly line is that the cost will be too high to have a car body accuracy high enough for pre programmed assembly. Therefore measurement systems are needed to compensate for variations of the position and orientation of the vehicle body and also to compensate for the variations of the positions and orientations of the different assembly places. The most efficient measurment system to measure deviations from the vehicle body that was used for the programming is a vision system, which could be a 2D or 3D system. Then one slender robot could carry vision cameras and make measurements while other robots perform the assembly.

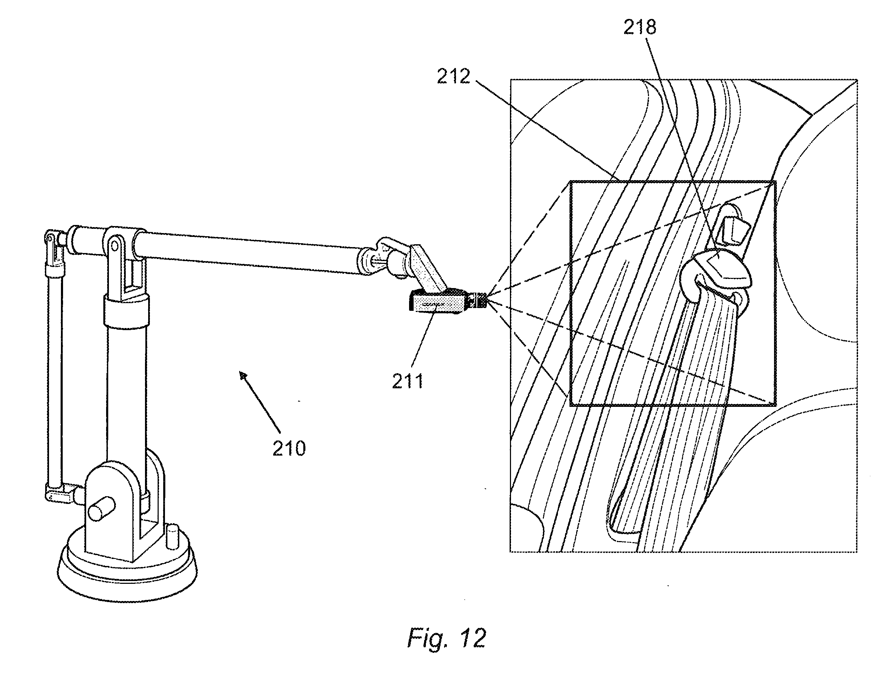

Figure 12 shows a situation where a part of a car is measured, for example for the assembly of a protection cap 218 for a safety belt holder. The operator moves with lead through the measurment robot 210 into position for the camera 211 to obtain an image 212 covering some details around the cap 218 to be mounted. When this is made the operator orders the vision system to capture a frame and to make pattern recognition.

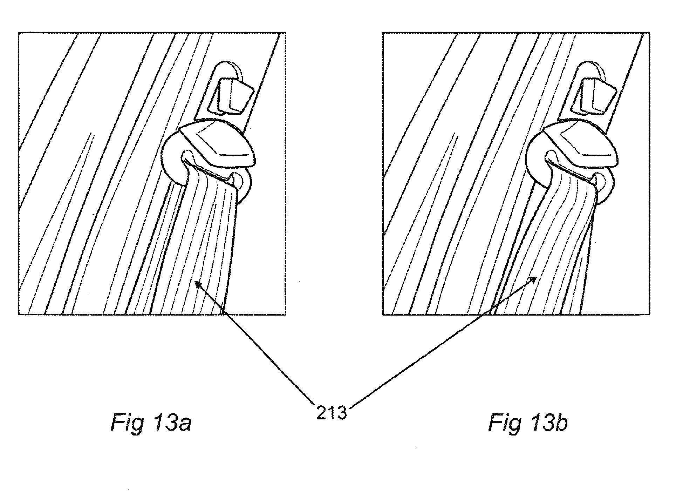

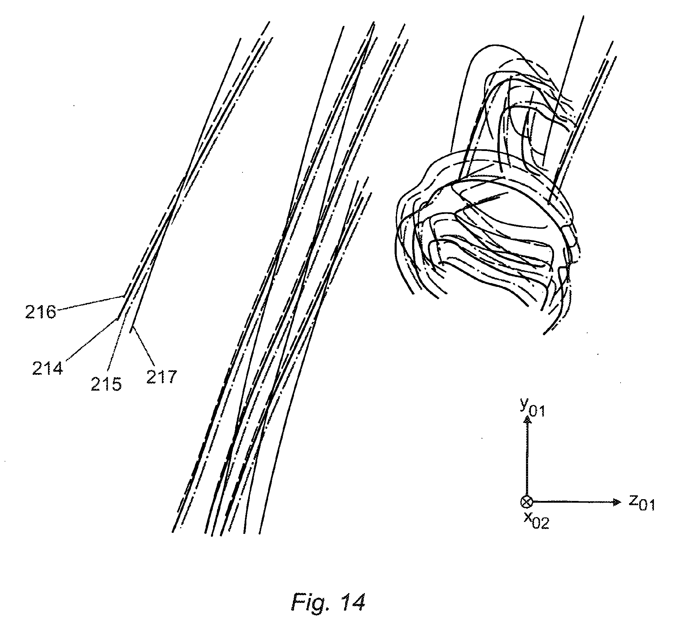

Figures 13a-b give an example of line structures, represented as 2D spline functions that the pattern recognition ends up with. In this case the safety belt itself 213 may give problems since its postion and orientation may vary from car to car. Therefore the operator puts the safety belt in another position and asks for a new pattern recognition. The vision vision evaluation software now has the function that it detects if lines have been changed and the area around these lines will not be used for the recognition in production. Next the operator asks for a relative calibration of the measurments. With one camera system accurate measurements can mainly be made with respect to translations and rotations in the image plane. Thus, Figure 14 shows the original line pattern 215 and the line patterns achieve with the camera moved in the Z_{O1} direction 215 and the Y_{O1} direction 216 and with the camera rotated around the X_{O1} axis.

The coordinate system axes directions were earlier defined simply by lead through in the Z_{O1} and the Y_{O1} directions. From the lines in Figure 14 it is possible to find the relations between the change in position and orientation of the pattern on the camera CCD surface and the corresponding changes in robot position and orientation of the robot Tool Coordinat System. In order to obtain the measurement sensitivity with respect to position errors in the X_{O1} direction and orientation errors around the Z_{O1} - and the Y_{O1} axes the robot also makes movements in the X_{O1} direction and reorientations around the Z_{O1} axis and the Y_{O1} axis and the errors obtained then after the best fit of the lines is calculated. Moreover, the system can also calculate the measurement error in the undisturbed best fit calculations and as a result the operator will get information about the accuracy possible to obtain with the measurements. The position for the measurements is sent over to the assembly robot and after lead through of this robot to about the same place as where the measurements were made, the assembly robot is asked to go to the exact measurement position. Here the coordinate system directions may be defined again by lead through if the assembly robot does not know the directions of the base coordinat system of the measurement robot. Then the operator asks for an instruction to compensate the position and orientation of the tool according to the sent over measurements from the measurement robot. Since no compensation is made at programming the operator proceeds with lead through to perform the assembly.

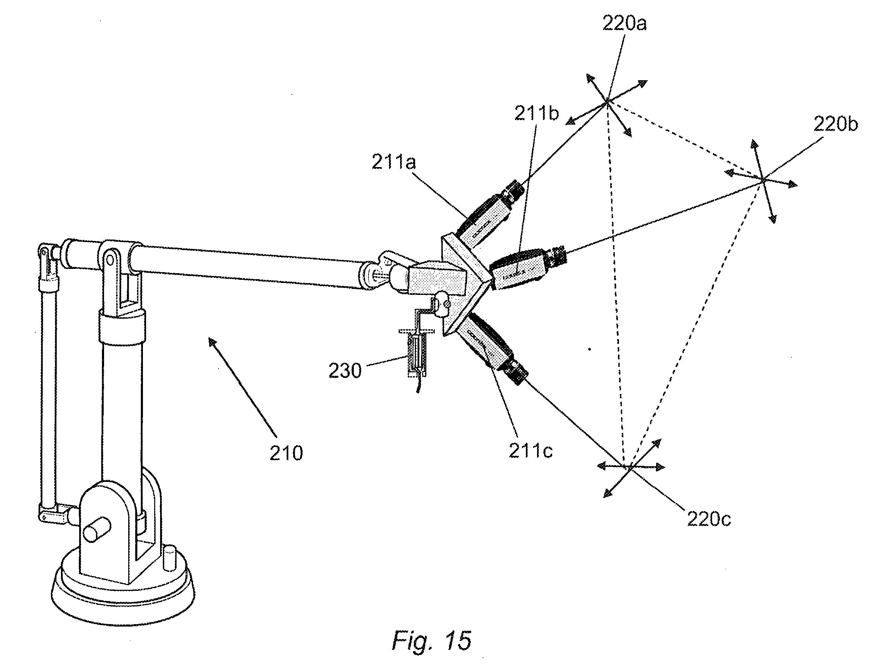

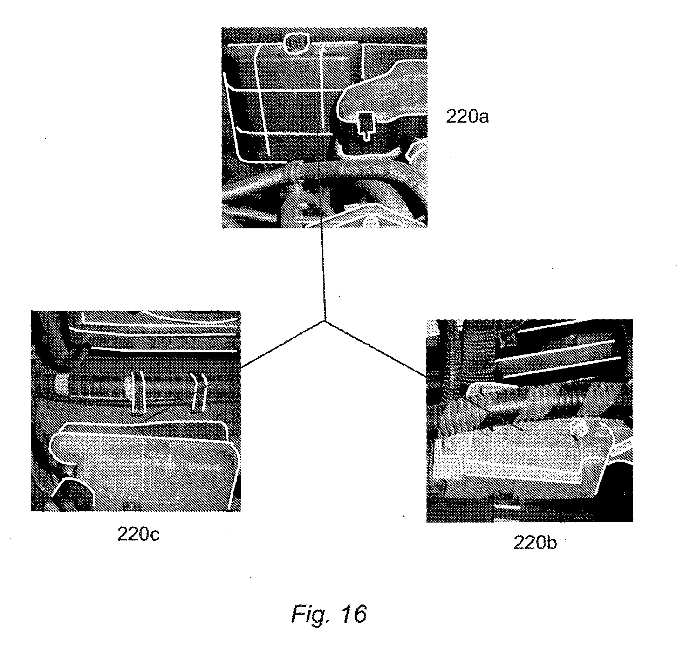

If accuracy is not high enough it might be necessary to make the measurements closer to the assembly position but then there is a risk that the image will lack information for the measurements of the number of degrees of feedom needed. Then more cameras can be used and figure 15 shows a constellation with three cameras 211 a-c which form an optical tripod. The three cameras will catch three images with image centres in 220a-c. In order to calculate the position and orientation of the robot wrist each camera needs to make two measurements and in the image centres 220a-c, the directions of measurements in the image planes are shown with the double arrows. Figure 16 shows an example of the three images at the final assembly of the engine compartment of a car. Several of the objects like hoses and cables do not have any accuracy in postion and orientation and by measurements on several cars the vision system will reject lines that do not repeat relative the other lines in the images. Notice that this is no stereo vision in its usual sense but a 6 DOF measurement method using three images.

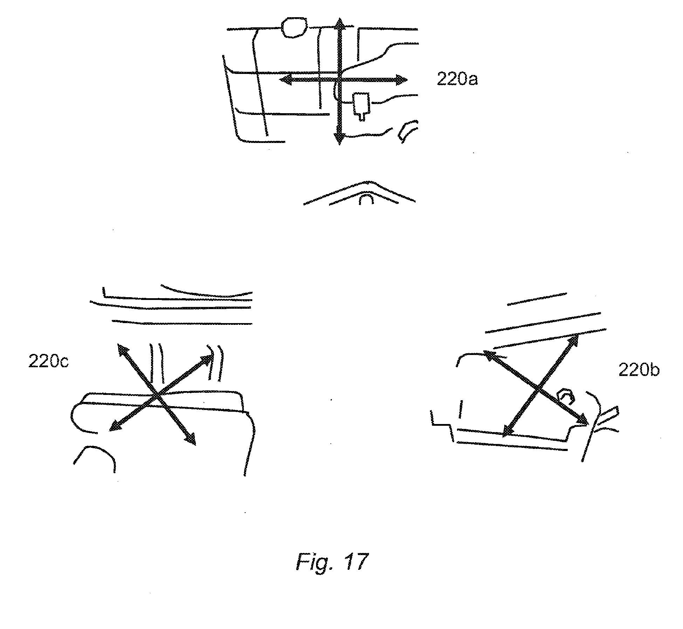

Figure 17 shows the extracted patterns and the directions in which relative measurements are made. In order to make a 6 DOF calibration of relative changes in the images to the corresponding relative motions of the robot, the robot tool coordinate system is moved in 3 directions and rotated around three coordinate axes while the movements of the patterns in the direections of the arrows in figure 17 are measured in the camera coordinate systems. The positions and orientations of the cameras on the robot do not need to be known. The cameras should just be mounted so that their measurement coordinate systems are rotated 120 degrees from camera to camera.

Pattern recognition can also be used to measure the position and orientation of an object after gripping. If, for example, a lot of precision multi gripping devices are needed for car assembly, time will be lost by a lot of tool exchanges and it will be expensive to have a large storage of special grippers. With simpler more general grippers, several components can be handled by the same gripper but the accuracy will not be good enough for the assembly process. This will motivate to measure gripped components with for example three cameras in a tripod configuration directed towards the centre of the component. With lead through and relative measurements the cameras do not need to be calibrated, the calibration is made automatically at programming. It may also be possible to use actuated camera platforms where the cameras are moved into different positions and orientations for different objects. It is then a big advantage that the calibration is automatically integrated into the robot program as well as the movement orders for the camera actuators and that the camera postions and orientations do not need to be calibrated separately and introduced as configuration parameters in the corresponding program.

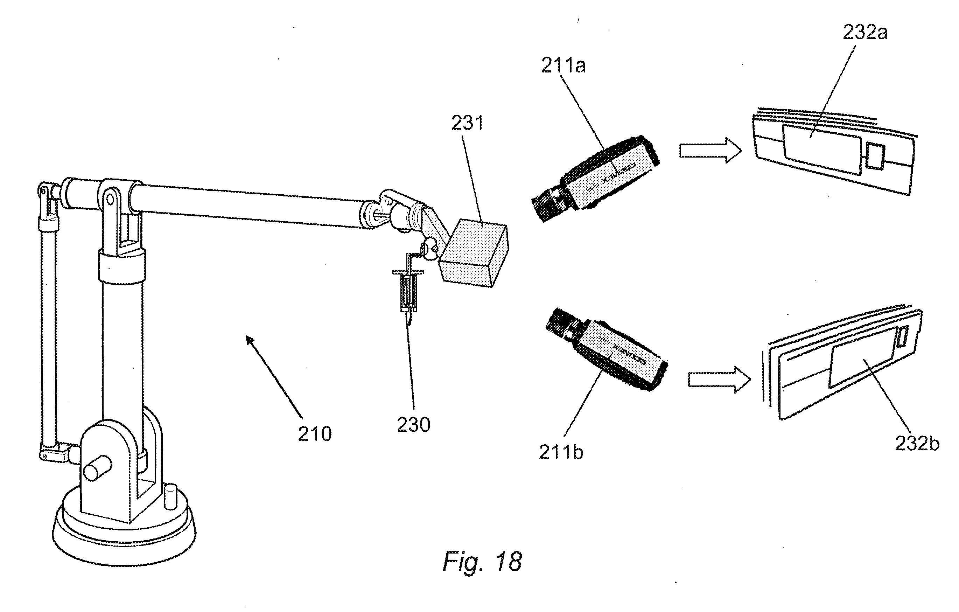

Instead of using three cameras with redundant information for 6DOF measurements two cameras can be used, se Figure 18. In this case the cameras cover about the same image and stereo processing of the images can be made. In the figure 210 is the robot, 230 the lead through handle, 231 the work object, 211 a and 211 b the cameras and 232a and 232b the processed image contours. After gripping the work object is moved by lead through in position in front of the cameras. The robot then makes the 6 DOF calibration movements and these movements are calibrated to the stereoscopic 6 DOF movements. With a simple gripper the gripping position will be different from time to time and to handle this the work object can be registered by the cameras in different girpping positions and if the structure of the gripper has less details than the work object the vision system can remove all image information coming from the gripper and only store information from the object. In the foundry case this problem was not present since the operator made scanning of parts of the casting that had no gripper details. The same can of course be made in the assemly case but then stereoscopic measurments may give too little image information since only one small part of the object may be used. If instead the method of using diferent parts is used as for the casting and also in the case according to figure 29 2 or 3 cameras can be directed on two respectively three images on the object to obtain maximum pattern information.

Also in the case shown in Figure 18 it is evident that there are lines that are not visible in both cameras and these lines will not be used in a pure steroescopic image processing. Of course 3D scanning can also be used in the cases shown in figures 29 and 18 to obtain higer robustness in order to get around the problem of varying light conditions. However, this will be more expensive and in contrast to the normal use of vision for robotics the lead through vision system programming presented here is not dependent on the light conditions as long as enough with information can be found in the images and as long as the light conditions do not change. The relative programming and measurements will always work as long as the conditions are repeatable. This is actually the foundation of the whole programming and calibration paradigm presented in this paper.

## Claims

1. A method for compensating for errors in a certain number of degrees of freedoms in the geometric relation between a work object (1;30) and a device (2;31,32) holding the object, wherein a measurement system including at least one sensor (3,20,21,22;34) is providing surface measurements on the object, and the method comprises:
a) placing a reference object in a first reference position and orientation relative to the sensor,
b) measuring the positions of a plurality of points on a first reference surface (10;35a) of the reference object and storing the measured positions,
c) calculating the position and orientation of the first reference surface based on the stored positions,
d) moving the reference object a known amount in a first degree of freedom relative to the sensor,
e) measuring the positions of a plurality of points on the first reference surface of the reference object and storing the measured positions,
f) calculating the position and orientation of the first reference surface after said moving based on the stored positions, **characterized in that** the method further comprises:
g) repeating the steps a-f for at least the same number of degrees of freedom as the number of degrees of freedom in which the object may have errors in relation to the device,
h) performing the steps b-g for at least two more reference surfaces (11,12,13;35b-c),
i) calculating by best fit the position and orientation changes of all the reference surfaces caused by the moving of the reference object,
j) calculating a relationship (50) between calculated position and orientation changes of the reference surfaces (51) and corresponding changes (52) of the position and orientation of the object hold by the device,
k) performing for all subsequent objects of the same type as the reference object hold by the device:
l) placing the object in said reference positions and orientations relative to the sensor,
m) measuring for all said reference positions and orientations the positions of a plurality of points on said reference surfaces of the object and storing the measured positions,
n) calculating the positions and orientations of the reference surfaces based on the stored measurements,
o) calculating by best fit the position and orientation changes of all the reference surfaces relative the position and orientation of the corresponding reference surfaces of the reference object,
p) calculating the difference in position and orientation between the object and the reference object by means of said relationship between calculated position and orientation changes of the reference surfaces and corresponding changes of the position and orientation of the object in the device, and
q) compensating for the errors in object position and orientation based on the difference in position and orientation between the object and the reference object.

2. The method according to claim 1, wherein said sensor is a 3D scanner or a 3D vision system.

3. The method according to claim 1 or 2, wherein said device is a gripper, a fixture, or jig for holding the object.

4. The method according to any of the previous claims, wherein the object is a casting and the device is a gripper

5. The method according to any of the previous claims, wherein the method is used for compensating for errors in the geometric relation between the work object and the device in connection with processing objects by means of an industrial robot programmed to follow a path or reach specific points on the object, and step q comprises correcting the programmed path or the specific points based on the difference in position and orientation between the object and the reference object.

6. The method according to claim 5, wherein the movements of the reference object in said degrees of freedom relative to the sensor, are generated automatically by a robot control unit controlling the movements of the robot.

7. The method according to any of the previous claims, wherein the errors in the geometric relationship between the object and the device are, during calibration, emulated by moving the device with a robot.

8. Use of the method according to any of claims 1-4 for correction of gripping errors in connection with processing objects by means of an industrial robot programmed to follow a path or reach specific points on the object.

9. An apparatus for compensating for errors in a certain number of degrees of freedoms in the geometric relation between a work object (1;30) and a device (2;31,32) holding the object, the apparatus comprising a measuring system having at least one sensor (3;20,21,22;34) for providing surface measurements on the object and a computing device (5) configured to receive said surface measurements and to control the movements of device holding the object, wherein the computing device have program code therein, said program code comprising code configured to:
A) move the holding device so that a reference object hold by the device is places in a first reference position and orientation relative to the sensor,
B) receive measurements of the positions of a plurality of points on a first reference surface (10;35a) of the reference object and to store the measured positions,
C) calculate the position and orientation of the first reference surface based on the stored positions,
D) move the reference object a known amount in a first degree of freedom relative to the sensor,
E) receive measurements of the positions of a plurality of points on the first reference surface of the reference object and store the measured positions,
F) calculate the position and orientation of the first reference surface after said moving of the holding device based on the stored positions, **characterized in that** the method further comprises:
G) repeat steps A-F for at least the same number of degrees of freedom as the number of degrees of freedom in which the object may have errors in relation to the device,
H) perform the steps B-G for at least two more reference surfaces (11,12,13;35b-c),
I) calculated by best fit the position and orientation changes of all the reference surfaces caused by the moving of the reference object,
J) calculate a relationship (50) between calculated position and orientation changes of the reference surfaces (51) and corresponding changes (52) of the position and orientation of the object hold by the device,
K) perform for all subsequent objects of the same type as the reference object hold by the device:
L) move the holding device so that the object is placed in said first reference position and orientation relative to the sensor,
M) receive for all said reference positions and orientations measurements of the positions of a plurality of points on said reference surfaces of the object and store the measured positions,
N) calculate the positions and orientations of the reference surfaces based on the stored measurements,
O) calculate by best fit the position and orientation changes of all the reference surfaces relative the position and orientation of the corresponding reference surfaces of the reference object,
P) calculate the difference in position and orientation between the object and the reference object by means of said relationship between calculated position and orientation changes of the reference surfaces and corresponding changes of the position and orientation of the object in the device, and
Q) compensate for the errors based on the difference in position and orientation between the object and the reference object.

10. The apparatus according to claim 9, wherein the device holding the object is moved by an industrial robot and said computing device is a control unit controlling the movement of the robot.

## Patentansprüche

1. Verfahren zum Ausgleichen von Fehlern in einer gewissen Anzahl der Freiheitsgrade in der geometrischen Beziehung zwischen einem Arbeitsgegenstand (1; 30) und einer Vorrichtung (2; 31, 32), die den Gegenstand hält, wobei ein Messsystem, das mindestens einen Sensor (3; 20, 21, 22; 34) umfasst, Oberflächenmessungen auf dem Gegenstand bereitstellt, und das Verfahren aufweist
a) Platzieren eines Referenzgegenstands in einer ersten Referenzposition und -ausrichtung relativ zum Sensor,
b) Messen der Positionen einer Vielzahl von Punkten auf einer ersten Referenzfläche (10; 35a) des Referenzgegenstands und Speichern der gemessenen Positionen,
c) Berechnen der Position und Ausrichtung der ersten Referenzfläche basierend auf den gespeicherten Positionen,
d) Bewegen des Referenzgegenstands um einen bekannten Betrag in einem ersten Freiheitsgrad relativ zum Sensor,
e) Messen der Positionen einer Vielzahl von Punkten auf der ersten Referenzfläche des Referenzgegenstands und Speichern der gemessenen Positionen,
f) Berechnen der Position und Ausrichtung der ersten Referenzfläche nach der Bewegung basierend auf den gespeicherten Positionen, **dadurch gekennzeichnet, dass** das Verfahren ferner aufweist:
g) Wiederholen der Schritte a-f für mindestens die gleiche Anzahl der Freiheitsgrade wie die Anzahl der Freiheitsgrade, in denen der Gegenstand Fehler in Bezug auf die Vorrichtung aufweisen kann,
h) Durchführen der Schritte b-g für mindestens zwei weitere Referenzflächen (11, 12, 13; 35b-c),
i) Berechnen durch Best-Fit der Änderungen der Position und Ausrichtung aller Referenzflächen, die durch das Bewegen des Referenzgegenstands verursacht wurden,
j) Berechnen einer Beziehung (50) zwischen Änderungen der berechneten Position und Ausrichtung der Referenzflächen (51) und entsprechender Änderungen (52) der Position und Ausrichtung des von der Vorrichtung gehaltenen Gegenstands,
k) Durchführung für alle nachfolgenden Gegenstände der gleichen Art wie der von der Vorrichtung gehaltene Referenzgegenstand,
l) Platzieren des Gegenstands in den Referenzpositionen und -ausrichtungen relativ zum Sensor,
m) Messen der Positionen einer Vielzahl von Punkten auf den Referenzflächen des Gegenstands für alle Referenzpositionen und -ausrichtungen und Speichern der gemessenen Positionen,
n) Berechnen der Positionen und Ausrichtungen der Referenzflächen basierend auf den gespeicherten Messungen,
o) Berechnen durch Best-Fit der Änderungen der Position und Ausrichtung aller Referenzflächen relativ zu der Position und Ausrichtung der entsprechenden Referenzflächen des Referenzgegenstands,
p) Berechnen des Unterschieds der Position und Ausrichtung zwischen dem Gegenstand und dem Referenzgegenstand durch die Beziehung zwischen Änderungen der berechneten Position und Ausrichtung der Referenzflächen und entsprechender Änderungen der Position und Ausrichtung des Gegenstands in der Vorrichtung, und
q) Ausgleichen der Fehler in der Gegenstandsposition und -ausrichtung basierend auf dem Unterschied der Position und Ausrichtung zwischen dem Gegenstand und dem Referenzgegenstand.

2. Verfahren nach Anspruch 1, wobei der Sensor ein 3D-Scanner oder ein optisches 3D-Erkennungssystem ist.

3. Verfahren nach Anspruch 1 oder 2, wobei die Vorrichtung ein Greifer, eine Befestigung oder eine Aufspannvorrichtung zum Halten des Gegenstands ist.

4. Verfahren nach einem der vorhergehenden Ansprüche, wobei der Gegenstand ein Gußstück und die Vorrichtung ein Greifer ist.

5. Verfahren nach einem der vorhergehenden Ansprüche, wobei das Verfahren zum Ausgleichen von Fehlern in der geometrischen Beziehung zwischen dem Arbeitsgegenstand und der Vorrichtung in Verbindung mit dem Verarbeiten von Gegenständen mittels eines Industrieroboters verwendet wird, der dazu programmiert ist, einem Weg zu folgen oder spezifische Punkte auf dem Gegenstand zu erreichen, und Schritt q umfasst das Korrigieren des programmierten Wegs oder der spezifischen Punkte basierend auf dem Unterschied der Position und Ausrichtung zwischen dem Gegenstand und dem Referenzgegenstand.

6. Verfahren nach Anspruch 5, wobei die Bewegungen des Referenzgegenstands in den Freiheitsgraden relativ zum Sensor automatisch durch eine Robotersteuereinheit erzeugt werden, die die Bewegungen des Roboters steuert.

7. Verfahren nach einem der vorhergehenden Ansprüche, wobei die Fehler in der geometrischen Beziehung zwischen dem Gegenstand und der Vorrichtung während der Einstellung durch Bewegen der Vorrichtung mit einem Roboter emuliert werden.

8. Verwendung des Verfahrens nach einem der Ansprüche 1-4 zum Korrigieren von Greiffehlern in Verbindung mit der Verarbeitung von Gegenständen mittels eines Industrieroboters, der dazu programmiert ist, einem Weg zu folgen oder spezifische Punkte auf dem Gegenstand zu erreichen.

9. Einrichtung zum Ausgleichen von Fehlern in einer gewissen Anzahl der Freiheitsgrade in der geometrischen Beziehung zwischen einem Arbeitsgegenstand (1; 30) und einer Vorrichtung (2; 31, 32), die den Gegenstand hält, wobei die Einrichtung ein Messsystem mit mindestens einem Sensor (3; 20, 21, 22; 34) zum Bereitstellen von Oberflächenmessungen auf dem Gegenstand und eine Berechnungsvorrichtung (5) aufweist, die dazu konfiguriert ist, die Oberflächenmessungen zu empfangen und die Bewegungen der Vorrichtung, die den Gegenstand hält, zu steuern, wobei die Berechnungsvorrichtung einen Programmcode enthält, wobei der Programmcode einen Code umfasst, der konfiguriert ist zum:
A) Bewegen der Haltevorrichtung, so dass ein von der Vorrichtung gehaltener Referenzgegenstand in einer ersten Referenzposition und -ausrichtung relativ zum Sensor platziert wird,
B) Empfangen von Messungen der Positionen einer Vielzahl von Punkten auf einer ersten Referenzfläche (10; 35a) des Referenzgegenstands und Speichern der gemessenen Positionen,
C) Berechnen der Position und Ausrichtung der ersten Referenzfläche basierend auf den gespeicherten Positionen,
D) Bewegen des Referenzgegenstands um einen bekannten Betrag in einem ersten Freiheitsgrad relativ zum Sensor,
E) Empfangen von Messungen der Positionen einer Vielzahl von Punkten auf der ersten Referenzfläche des Referenzgegenstands und Speichern der gemessenen Positionen,
F) Berechnen der Position und Ausrichtung der ersten Referenzfläche nach dem Bewegen der Haltevorrichtung basierend auf den gespeicherten Positionen, **dadurch gekennzeichnet, dass** das Verfahren ferner aufweist:
G) Wiederholen der Schritte A-F für mindestens die gleiche Anzahl der Freiheitsgrade wie die Anzahl der Freiheitsgrade, in denen der Gegenstand Fehler in Bezug auf die Vorrichtung aufweisen kann,
H) Durchführen der Schritte B-G für mindestens zwei weitere Referenzflächen (11, 12, 13; 35b-c),
I) Berechnen durch Best-Fit der Änderungen der Position und Ausrichtung aller Referenzflächen, die durch das Bewegen des Referenzgegenstands verursacht wurden,
J) Berechnen einer Beziehung (50) zwischen Änderungen der berechneten Position und Ausrichtung der Referenzflächen (51) und entsprechender Änderungen (52) der Position und Ausrichtung des von der Vorrichtung gehaltenen Gegenstands,
K) Durchführung für alle nachfolgenden Gegenstände der gleichen Art wie der von der Vorrichtung gehaltene Referenzgegenstand,
L) Bewegen der Haltevorrichtung, so dass der Gegenstand in der ersten Referenzposition und -ausrichtung relativ zum Sensor platziert wird,
M) Empfangen von Messungen der Positionen einer Vielzahl von Punkten auf den Referenzflächen des Gegenstands für alle Referenzpositionen und -ausrichtungen und Speichern der gemessenen Positionen,
N) Berechnen der Positionen und Ausrichtungen der Referenzflächen basierend auf den gespeicherten Messungen,
O) Berechnen durch Best-Fit der Änderungen der Position und Ausrichtung aller Referenzflächen relativ zu der Position und Ausrichtung der entsprechenden Referenzflächen des Referenzgegenstands,
P) Berechnen des Unterschieds der Position und Ausrichtung zwischen dem Gegenstand und dem Referenzgegenstand durch die Beziehung zwischen Änderungen der berechneten Position und Ausrichtung der Referenzflächen und entsprechender Änderungen der Position und Ausrichtung des Gegenstands in der Vorrichtung, und
Q) Ausgleichen der Fehler basierend auf dem Unterschied der Position und Ausrichtung zwischen dem Gegenstand und dem Referenzgegenstand.

10. Einrichtung nach Anspruch 9, wobei die Vorrichtung, die den Gegenstand hält, durch einen Industrieroboter bewegt wird und die Berechnungsvorrichtung eine Steuereinheit ist, die die Bewegung des Roboters steuert.

## Revendications

1. Procédé de compensation d'erreurs dans un certain nombre de degrés de liberté dans la relation géométrique entre un objet de travail (1 ; 30) et un dispositif (2 ; 31, 32) maintenant l'objet, dans lequel un système de mesure comprenant au moins un capteur (3 ; 20, 21, 22 ; 34) effectue des mesures de surface sur l'objet, et le procédé consiste à :
a) placer un objet de référence à une première position et dans une première orientation de référence par rapport au capteur,
b) mesurer les positions d'une pluralité de points sur une première surface de référence (10 ; 35a) de l'objet de référence et mémoriser les positions mesurées,
c) calculer la position et l'orientation de la première surface de référence sur la base des positions mémorisées,
d) déplacer l'objet de référence d'une quantité comme dans un premier degré de liberté par rapport au capteur,
e) mesurer les positions d'une pluralité de points sur la première surface de référence de l'objet de référence et mémoriser les positions mesurées,
f) calculer la position et l'orientation de la première surface de référence après ledit déplacement sur la base des positions mémorisées, **caractérisé en ce que** le procédé consiste en outre à :
g) répéter les étapes a à f pour au moins le même nombre de degrés de liberté que le nombre de degrés de liberté dans lesquels l'objet peut présenter des erreurs en relation avec le dispositif,
h) effectuer les étapes b à g pour au moins deux surfaces de référence (11, 12, 13 ; 35b-c) supplémentaires,
i) calculer par le meilleur ajustement les changements de position et orientation de toutes les surfaces de référence provoqués par le déplacement de l'objet de référence,
j) calculer une relation (50) entre les changements de position et d'orientation calculés des surfaces de référence (51) et les changements (52) correspondants de la position et de l'orientation de l'objet maintenu par le dispositif,
k) effectuer pour tous les objets suivants du même type que l'objet de référence maintenu par le dispositif :
l) le placement de l'objet auxdites positions et dans lesdites orientations de référence par rapport au capteur,
m) la mesure, pour toutes lesdites positions et orientations de référence, des positions d'une pluralité de points sur lesdites surfaces de référence de l'objet et la mémorisation des positions mesurées,
n) le calcul des positions et des orientations des surfaces de référence sur la base des mesures mémorisées,
o) le calcul par le meilleur ajustement des changements de position et d'orientation de toutes les surfaces de référence par rapport à la position et à l'orientation des surfaces de référence correspondantes de l'objet de référence,
p) le calcul de la différence de position et d'orientation entre l'objet et l'objet de référence au moyen de ladite relation entre les changements de position et d'orientation calculés des surfaces de référence et les changements correspondants de la position et de l'orientation de l'objet dans le dispositif, et
q) la compensation des erreurs de position et d'orientation de l'objet sur la base de la différence de position et d'orientation entre l'objet et l'objet de référence.

2. Procédé selon la revendication 1, dans lequel ledit capteur est un scanner 3D ou un système de vision 3D.

3. Procédé selon la revendication 1 ou 2, dans lequel ledit dispositif est un dispositif de préhension, un dispositif de serrage ou un montage pour maintenir l'objet.

4. Procédé selon l'une quelconque des revendications précédentes, dans lequel l'objet est une pièce coulée et le dispositif est un dispositif de préhension.

5. Procédé selon l'une quelconque des revendications précédentes, dans lequel le procédé est utilisé pour compenser des erreurs dans la relation géométrique entre l'objet de travail et le dispositif en relation avec des objets de traitement au moyen d'un robot industriel programmé pour suivre un trajet ou attendre des points spécifiques sur l'objet, et l'étape q comprend la correction du trajet programmé ou des points spécifiques sur la base de la différence de position et d'orientation entre l'objet et l'objet de référence.

6. Procédé selon la revendication 5, dans lequel les mouvements de l'objet de référence dans lesdits degrés de liberté par rapport au capteur sont générés automatiquement par une unité de commande de robot commandant les mouvements du robot.

7. Procédé selon l'une quelconque des revendications précédentes, dans lequel les erreurs dans la relation géométrique entre l'objet et le dispositif sont, pendant l'étalonnage, émulées en déplaçant le dispositif par un robot.

8. Utilisation du procédé selon l'une quelconque des revendications 1 à 4 pour corriger des erreurs de préhension en relation avec des objets de traitement au moyen d'un robot industriel programmé pour suivre un trajet ou atteindre des points spécifiques sur l'objet.

9. Appareil pour compenser des erreurs dans un certain nombre de degrés de liberté dans la relation géométrique entre un objet de travail (1 ; 30) et un dispositif (2 ; 31, 32) maintenant l'objet, l'appareil comprenant un système de mesure comportant au moins un capteur (3 ; 20, 21, 22 ; 34) pour effectuer des mesures de surface sur l'objet et un dispositif de calcul (5) configuré pour recevoir lesdites mesures de surface et pour commander les mouvements du dispositif maintenant l'objet, dans lequel le dispositif de calcul contient un code de programme dans celui-ci, ledit code de programme comprenant un code configuré pour :
A) déplacer le dispositif de maintien de sorte qu'un objet de référence maintenu par le dispositif soit placé à une première position et dans une première orientation de référence par rapport au capteur,
B) recevoir les mesures des positions d'une pluralité de points sur une première surface de référence (10 ; 35a) de l'objet de référence et mémoriser les positions mesurées,
C) calculer la position et l'orientation de la première surface de référence sur la base des positions mémorisées,
D) déplacer l'objet de référence d'une quantité connue dans un premier degré de liberté par rapport au capteur,
E) recevoir les mesures des positions d'une pluralité de points sur la première surface de référence de l'objet de référence et mémoriser les positions mesurées,
F) calculer la position et l'orientation de la première surface de référence après ledit déplacement du dispositif de maintien sur la base des positions mémorisées, **caractérisé en ce que** le procédé consiste en outre à :
G) répéter les étapes A à F pour au moins le même nombre de degrés de liberté que le nombre de degrés de liberté dans lesquels l'objet peut présenter des erreurs en relation avec le dispositif,
H) effectuer les étapes B à G pour au moins deux surfaces de référence (11, 12, 13 ; 35b-c) supplémentaires,
I) calculer par le meilleur ajustement les changements de position et d'orientation de toutes les surfaces de référence provoqués par le déplacement de l'objet de référence,
J) calculer une relation (50) entre les changements de position et d'orientation calculés des surfaces de référence (51) et les changements (52) correspondants de la position et de l'orientation de l'objet maintenu par le dispositif,
K) effectuer pour tous les objets suivants du même type que l'objet de référence maintenu par le dispositif :
L) le déplacement du dispositif de maintien de sorte que l'objet soit placé à ladite première position et dans ladite première orientation de référence par rapport au capteur,
M) la réception, pour toutes lesdites positions et orientations de référence, des mesures des positions d'une pluralité de points sur lesdites surfaces de référence de l'objet et la mémorisation des positions mesurées,
N) le calcul des positions et des orientations des surfaces de référence sur la base des mesures mémorisées,
O) le calcul par le meilleur ajustement des changements de position et d'orientation de toutes les surfaces de référence par rapport à la position et à l'orientation des surfaces de référence correspondantes de l'objet de référence,
P) le calcul de la différence de position et d'orientation entre l'objet et l'objet de référence au moyen de ladite relation entre les changements de position et d'orientation calculés des surfaces de référence et les changements correspondants de la position et de l'orientation de l'objet dans le dispositif, et
Q) la compensation des erreurs sur la base de la différence de position et d'orientation entre l'objet et l'objet de référence.

10. Appareil selon la revendication 9, dans lequel le dispositif maintenant l'objet est déplacé par un robot industriel et ledit dispositif de calcul est une unité de commande commandant le mouvement du robot.
